# EUROPÄISCHE PATENTSCHRIFT

(11) **EP 3 405 686 B1**
(45) Veröffentlichungstag und Bekanntmachung des Hinweises auf die Patenterteilung: **02.10.2019**
(21) Anmeldenummer: 17702091.4
(22) Anmeldetag: 30.01.2017
(51) Int. Cl.: F16B 25/00

(54) **KUNSTSTOFF-GEWINDEELEMENT SOWIE VERBINDUNGSANORDNUNG BESTEHEND AUS EINEM KUNSTSTOFFTRÄGERTEIL UND EINEM KUNSTSTOFF-GEWINDEELEMENT**
PLASTIC THREAD ELEMENT AND CONNECTION ASSEMBLY CONSISTING OF A PLASTIC CARRIER PART AND A PLASTIC THREAD PART
ELÉMENT FILETÉ EN PLASTIQUE ET DISPOSITIF DE RACCORDEMENT CONSTITUÉ D'UNE PIÈCE DE SUPPORT EN PLASTIQUE ET D'UN ÉLÉMENT FILETÉ EN PLASTIQUE

(30) Priorität: 03.02.2016 DE 102016101910
(43) Veröffentlichungstag der Anmeldung: 28.11.2018
(73) Patentinhaber: Böllhoff Verbindungstechnik GmbH, 33649 Bielefeld (DE)
(72) Erfinder: VORDERWISCH, Alexander, 33803 Steinhagen (DE)
(74) Vertreter: HWP Intellectual Property
(86) Internationale Anmeldenummer: PCT/EP2017/051918
(87) Internationale Veröffentlichungsnummer: WO 2017/134009

(56) Entgegenhaltungen:
- DE-A1-102004 021 484

## Beschreibung

### 1. Gebiet der Erfindung

Die vorliegende Erfindung betrifft ein Gewindeelement aus Kunststoff, insbesondere eine Kunststoffschraube, eine Kunststoffgewindebuchse mit einem Innengewinde und einen Kunststoffgewindeeinsatz, eine Verbindungsanordnung aus einem Kunststoff-Trägerteil mit einer Aufnahmeöffnung, in die das Gewindeelement unter selbsttätigem Formen eines Gewindes eingeschraubt worden ist, und ein Verfahren zum Herstellen der Verbindungsanordnung aus dem mindestens einen Trägerteil aus Kunststoff und dem Gewindeelement aus Kunststoff sowie ein Verfahren zum Herstellen des Gewindeelements.

### 2. Hintergrund der Erfindung

Die oben genannten Verbindungsanordnungen aus mindestens einem Trägerteil aus Kunststoff und einem Kunststoff-Gewindeelement in Form einer Schraube oder einer Gewindebuchse mit einem selbstformenden Außengewinde sind im Stand der Technik bekannt. Sie sind bspw. in DE 2 047 482 A1, US 4,637,767, US 5,921,735, US 5,385,439 und in DE 10 2004 021 484 A1 beschrieben.

US 5,385,439 beschreibt eine Schraube, auf deren Schaft ein Außengewinde angeordnet ist. Auf einzelnen Windungen des Gewindegangs dieser Schraube sind Formelemente vorgesehen. Diese Formelemente erstrecken sich in radialer Richtung und/oder in axialer Richtung über die geometrischen Abmessungen der angrenzenden Windung des Gewindegangs hinaus. Auf diese Weise formen sie ein Gegengewinde bspw. in einem Trägerteil aus, gerade wenn die Formelemente in den ersten Windungen nahe dem Spitzenbereich der Schraube des Gewindegangs angeordnet sind.

US 5,921,735 beschreibt eine Schraube, deren Schaft ebenfalls mit einem Außengewinde ausgestattet ist. Dieses Außengewinde zeichnet sich durch vier verschiedene Gewindezonen aus, die über die Länge der Schraube auf dem Schaft verteilt sind. Indem die Querschnittsform des Schafts und des darauf angeordneten Gewindes verändert werden, können eine Haltezone, verschiedene Gewindeformungszonen sowie eine Ausrichtungszone innerhalb des Außengewindes der Schraube realisiert werden.

US 4,637,767 beschreibt ebenfalls eine Schraube mit Außengewinde, wobei die einzelnen Windungen des Gewindegangs mit nockenähnlichen radial schneidenden Vorsprüngen ausgestattet sind. Diese Vorsprünge unterstützen das Einformen eines Gegengewindes in eine Bauteilwand. Gleichzeitig stellen diese Vorsprünge aber auch eine Rotationshemmung bereit, die den Halt des eingeschraubten Gewindeelements im Trägerbauteil unterstützen. Aufgrund der umfänglich frei verteilten Vorsprünge ergeben sich ungleichmäßige Torsionsbelastungen entlang der Länge des Schraubenschafts während des Eindrehens des Gewindeelements in das Trägerbauteil. Diese unterschiedlichen Torsionsbelastungen können zum Versagen des Gewindeelements führen.

DE 2 047 482 beschreibt ebenfalls eine ein Gewinde erzeugende Schraube. Der Schraubenschaft umfasst fünf abgerundete Ecken, in die entsprechende Gewindeabschnitte eingeschnitten worden sind. Zwischen diesen Gewindeabschnitten befinden sich fünf entlastende Abflachungen mit unvollständigem Gewinde. An den eckigen Gewindevorsprüngen hat das Gewinde seine volle Tiefe, während die Tiefe in den flachen Abschnitten wesentlich geringer ausgebildet ist. Die abgeflachten Entlastungsbereiche zwischen den Eckbereichen mit Gewinde dienen der Aufnahme von Abriebmaterial, so dass sich die Schraube frei bewegen kann.

DE 10 2004 021 484 A1 beschreibt ein Kunststoff-Gewindeelement, das Schneidkanten und eine daran angrenzende Spannut aufweist. Um diese spezielle Schneidgeometrie des Gewindeprofils zu erzeugen, besteht das Gewindeelement aus mehreren Winkelsegmenten, die radial gegeneinander so versetzt sind, dass jeweils benachbarte Winkelsegmente in Einschraubrichtung wirksame Schneidkanten bilden. Dies bedeutet, dass die im Axialschnitt betrachteten Hälften des Schraubenschafts oder allgemein des Außengewindes in radialer Richtung derart gegeneinander versetzt sind, dass das Außengewinde keinen konstanten Kerndurchmesser aufweist. Durch diesen Versatz entstehen radial überstehende Schneidkanten im Verlauf des Gewindegangs bzw. innerhalb einer Windung, die ein Gegengewinde im Trägerbauteil ausformen, Gemäß einer anderen Alternative sind aus den umlaufenden Windungen des Gewindegangs Kerben ausgeschnitten worden, so dass deren Radialseite eine Schneidkante zum Ausformen eines Gegengewindes bildet. Diese Konstruktion hat jedoch den Nachteil, dass das Einschraubmoment aufgrund der Schneidkanten in Einschraubrichtung höher als das Lösemoment ist. Aufgrund dieser Konstellation ist generell ein Lösen des Gewindeelements begünstigt.

Es ist daher die Aufgabe vorliegender Erfindung, ein Gewindeelement mit Außengewinde, eine Verbindungsanordnung bestehend aus mindestens einem Trägerteil und diesem Gewindeelement sowie ein Verfahren zum Herstellen der Verbindung bereitzustellen, die im Vergleich zum Stand der Technik ein verbessertes Verhältnis von Eindrehmoment und Lösemoment, einen verbesserten Drehmomentverlauf beim Eindrehen des Gewindeelements in eine Bauteilöffnung sowie eine größere Toleranz zwischen einem Durchmesser des Gewindeelements und einem Durchmesser der das Gewindeelement aufnehmenden Bauteilöffnung aufweisen.

### 3 Zusammenfassung der Erfindung

Die obige Aufgabe wird durch ein Gewindeelement aus Kunststoff gemäß dem unabhängigen Patentanspruch 1, eine Verbindungsanordnung mit mindestens einem Trägerteil aus Kunststoff und diesem Gewindeelement gemäß dem unabhängigen Patentanspruch 11, durch ein Verfahren zum Herstellen einer Verbindungsanordnung aus mindestens einem Trägerteil aus Kunststoff und einem Gewindeelement aus Kunststoff gemäß dem unabhängigen Patentanspruch 12 sowie durch ein Herstellungsverfahren für ein Gewindeelement aus Kunststoff gemäß dem unabhängigen Patentanspruch 14 gelöst. Vorteilhafte Ausgestaltungen vorliegender Erfindung sowie Weiterentwicklungen gehen aus der folgenden Beschreibung, den begleitenden Zeichnungen und den anhängenden Ansprüchen hervor.

Das erfindungsgemäße Gewindeelement aus Kunststoff umfasst ein Axialstück mit einer Mittelachse und einem um die Mittelachse in mehreren Windungen umlaufenden Gewindegang als Außengewinde. Das Außengewinde ist angepasst, um bei einem Einschrauben in eine Aufnahmeöffnung eines Trägerteils aus Kunststoff ein Gegengewinde zu formen, wobei eine Mehrzahl benachbarter Windungen zumindest über einen Teilbereich des Axialstücks durch mindestens zwei parallel zur Mittelachse verlaufende Spannuten durchbrochen sind, so dass jede durchbrochene Windung zumindest einen Schneidsteg und einen Hemmsteg aufweist, wobei eine radiale Ausdehnung des Schneidstegs größer ist als eine radiale Ausdehnung des Hemmstegs, und eine Kerndicke des Axialstücks senkrecht zur Mittelachse des Außengewindes zumindest in dem Teilbereich des Axialstücks außerhalb der Längsnuten konstant ist. Gemäß einer bevorzugten Ausführungsform vorliegender Erfindung weist jeweils der Schneidsteg und/oder der Hemmsteg in seinem umfänglichen Verlauf einen konstanten Radius auf. Es ist weiterhin bevorzugt, dass sich ein Radius der Schneidstege und/oder Hemmstege bezogen auf die Längsrichtung des Gewindeelements verändert. Auf diese Weise sind Schneidtiefen der Schneidstege und/oder die Stärke des Presssitzes der Hemmstege im Bauteil bezogen auf die axiale Länge des Gewindeelements gezielt einstellbar. Dies eröffnet die Möglichkeit, eine Torsionsbelastung des Gewindeelements in axialer Richtung auf das Gewindeelement zu verteilen.

Das erfindungsgemäße Gewindeelement besteht aus Kunststoff und ist gerade zum Einschrauben in Kunststoffträgerteile konfiguriert. Zu diesem Zweck ist das Außengewinde des Gewindeelements derart gestaltet, dass es in einer Aufnahmeöffnung des Trägerteils ein passendes Gegengewinde erzeugt. Gemäß unterschiedlicher bevorzugter Ausführungsformen vorliegender Erfindung, sind derartige Gewindeelemente aus Kunststoff als Schraube mit einem Schraubenkopf und einer Schraubenspitze oder als Gewindebuchse mit einem Innengewinde und dem erfindungsgemäß bevorzugten Außengewinde oder mit einer Durchgangsbohrung ohne Gewinde oder als Gewindebuchse mit einer beliebigen Innenstruktur oder als Hohlschraube mit dem erfindungsgemäß bevorzugten Au-ßengewinde, wie vorzugsweise als ein Compression Limiter, ausgestaltet.

Das erfindungsgemäße Gewindeelement umfasst einen Gewindegang, der sich in mehreren Windungen um die Mittelachse des Gewindeelements entlang des Axialstücks, bspw. des Schafts der Schraube, erstreckt. Dabei bezeichnet eine Windung einen Umlauf des Gewindegangs von 360° um die Mittelachse des Gewindeelements. Um ein passendes Gegengewinde in der Aufnahmeöffnung des Trägerteils aus Kunststoff zu erzeugen, ist zumindest eine Mehrzahl benachbart angeordneter Gewindegänge durch parallel zur Mittelachse verlaufende Spannuten in zumindest jeweils zwei Stege unterteilt. Diese Spannuten reichen vorzugsweise bis zur Kerndicke des Gewindeelements, so dass sie die jeweilige Windung in zumindest zwei voneinander getrennte Windungsbereiche unterteilt. Diese Windungsbereiche bilden mindestens einen Schneidsteg und mindestens einen Hemmsteg. Der Schneidsteg zeichnet sich dadurch aus, dass er in radialer Richtung über den Hemmsteg hinausragt. Da der Schneidsteg vorzugsweise in Einschraubrichtung des Gewindeelements betrachtet dem Hemmsteg vorgelagert ist, formt er ein passendes Gegengewinde im Trägerteil aus Kunststoff vor, während der nachfolgende Hemmsteg einen passenden Presssitz in dem erzeugten Gegengewinde zur Befestigung des Gewindeelements bewirkt. Bezugnehmend auf die Ausdrehrichtung des Gewindeelements wirken die Schneidstege ebenfalls bevorzugt als drehungshemmend. Auf diese Weise unterstützen sie die mit geringerem Durchmesser ausgestatteten Hemmstege bzw. Druckstege, die elastisch drückend in die vorgefurchten Wendeln des Gegengewindes eingreifen und auf diese Weise eine Brems- oder Hemmwirkung sowohl beim Eindrehen als auch beim Ausdrehen des Gewindeelements aus der Aufnahmeöffnung des Trägerteils erzeugen. In Bezug auf ein vorteilhaftes Eindrehen ist es bevorzugt, wenn ein Schneidwiderstand des Schneidstegs gering und gleichmäßig eingestellt wird. Durch diese passende Einstellung des Schneidwiderstands wird eine Torsionsbelastung des Gewindeelements reduziert. Da der Schneidsteg beim Eindrehen des Gewindeelements in die Bauteilöffnung oder beim Erzeugen des passenden Gegengewindes vorzugsweise schneidend oder schabend Material des Trägerteils abträgt, wird dieses bevorzugt in den Spannuten gesammelt und über die Spannuten von der Gewindeverbindung abgeführt. Gleichzeitig ist es aber ebenfalls möglich, dass durch die Schneidstege Material aufgeschoben wird, ohne dass dies die Erzeugung des passenden Gegengewindes behindert. Aufgrund der konstanten Kerndicke ist das Gewindeelement abgesehen von den Schneidstegen mit größerem Radius bevorzugt symmetrisch ausgebildet.

Erfindungsgemäß bevorzugt ist eine geradzahlige Anzahl von Spannuten im Gewindeelement vorgesehen, vorzugsweise zwei oder vier oder sechs oder acht Spannuten. Diese verlaufen, wie oben bereits definiert worden ist, parallel zur Mittelachse des Axialstücks. Entsprechend der Anzahl der Spannuten wird die jeweilige Windung in eine entsprechende Anzahl von Windungsabschnitten unterteilt. Diese Windungsabschnitte können als Schneidsteg und/oder Hemmsteg konfiguriert sein.

Gemäß einer weiteren bevorzugten Ausführungsform vorliegender Erfindung umfasst das Gewindeelement einen, zwei oder vier Schneidstege pro Windung, wobei bei mehr als einem und einer geradzahligen Anzahl von Schneidstegen diese paarweise einander gegenüberliegend angeordnet sind. Es ist ebenfalls bevorzugt, drei Schneidstege gleichmäßig beabstandet entlang des Umfangs des Gewindeelements anzuordnen.

Entsprechend der oben genannten Anzahl von Spannuten, die die jeweilige Windung in entsprechende Windungsabschnitte unterteilt, ist die Anzahl an Schneidstegen und Hemmstegen pro Windung einstellbar. Auf diese Weise ist es möglich, die Torsionsbelastung des Gewindeelements beim Drehen an den Kunststoff des Gewindeelements und/oder an den Kunststoff des Trägerteils anzupassen. Wird bspw. bei nur einem Schneidsteg pro Windung die Torsionsbelastung des Gewindeelements zu hoch, ist es erforderlich, einen weiteren Schneidsteg pro Windung vorzusehen. Dieser unterstützt das Ausformen des Gegengewindes und gleichzeitig die Reduktion der Torsionsbelastung des Gewindeelements, um das Kunststoff-Gewindeelement verlässlich und unbeschädigt in das Trägerteil einschrauben zu können. Entsprechend gewährleistet aber auch eine optimal angepasste Anzahl von Hemmstegen pro Windung einen ausreichenden und verlässlichen Halt des Gewindeelements im Trägerteil durch die am Hemmsteg erzeugten Druckspannungen zwischen Trägerteil und Gewindeelement.

Gemäß einer weiteren bevorzugten Ausführungsform vorliegender Erfindung ist die radiale Ausdehnung des Schneidstegs 0,1 bis 0,5 mm größer als die radiale Ausdehnung des Hemmstegs der Windung. Diese Geometrie und Dimensionierung des Schneidstegs gewährleistet eine ausreichende Schneidwirkung und somit Erzeugung des Gegengewindes im Trägerteil. Des Weiteren realisiert diese Dimensionierung des Schneidstegs eine geeignete Vorbereitung des Gegengewindes auf den mithilfe des nachfolgenden Hemmstegs zu erzeugenden Presssitz zwischen Trägerteil und Gewindeelement. Die Wirkung des Schneidstegs wird vorzugsweise dadurch unterstützt, dass der Schneidsteg an seiner radialen Außenseite scharfkantig, vorzugsweise abgeflacht oder mit einem Krümmungsradius von unendlich, ausgebildet ist, Gemäß einer weiteren bevorzugten Ausführungsform wird die Wirkung der Hemmstege dadurch unterstützt, dass der Hemmsteg an seiner radialen Außenseite verrundet ist.

Gemäß einer weiteren bevorzugten Ausführungsform vorliegender Erfindung durchbrechen die Spannuten die Windungen des Außengewindes bis zur Kerndicke des Gewindeelements oder darüber hinaus, Diese bevorzugte Tiefe der Spannuten dient dazu, einerseits ein ausreichendes Freivolumen für die Aufnahme von abgetragenem Material bereitzustellen. Des Weiteren gewährleistet die Tiefe der Spannuten, dass die in Umfangsrichtung des Gewindeelements orientierten seitlichen Flächen der Schneidstege und Hemmstege vollständig für den Eingriff in das Material des Trägerteils zur Verfügung stehen. Auf diese Weise entwickelt vorzugsweise der Schneidsteg seine maximal mögliche Schneid- oder Kerb- oder Furchwirkung beim Eindrehen. In gleicher Weise wirken diese seitlichen Stirnflächen des Schneidstegs und des Hemmstegs auch ausdrehhemmend, wenn das Gewindeelement durch äußere Einflüsse auf die Verbindung aus Trägerteil und Gewindeelement gelockert werden sollte.

Gemäß einer weiteren bevorzugten Ausführungsform vorliegender Erfindung weist der Schneidsteg eine umfängliche Erstreckung mit einem Anfangs- und einem Endpunkt betrachtet in Eindrehrichtung auf, wobei die radiale Ausdehnung des Schneidstegs am Anfangspunkt größer ist als die radiale Ausdehnung des Schneidstegs am Endpunkt. Aufgrund dieser speziellen Dimensionierung des Schneidstegs weist dieser in Umfangsrichtung betrachtet eine Neigung auf. Bezogen auf das Drehen des Gewindeelements in Ausdrehrichtung entwickelt auf diese Weise der Schneidsteg eine Keilwirkung, die dem Ausdrehen des Gewindeelements aus einer Aufnahmeöffnung des Trägerteils hemmende Druckspannungen gerade zwischen dem Anfangspunkt des Schneidstegs und der Wand des Gegengewindes entgegensetzt. Es ist ebenfalls bevorzugt, dass die radiale Ausdehnung des Schneidstegs am Anfangspunkt und am Endpunkt gleich groß ist. Gemäß einer weiteren bevorzugten Ausführungsform vorliegender Erfindung sind Schneidstege mit konstantem Radius oder mit unterschiedlichem Radius am Gewindeelement angeordnet. Es ist ebenfalls bevorzugt, Hemmstege mit konstantem Radius oder mit unterschiedlichem Radius am Gewindeelement anzuordnen.

Vorliegende Erfindung umfasst zudem eine Verbindungsanordnung mit mindestens einem Trägerteil aus Kunststoff und dem oben beschriebenen Gewindeelement aus Kunststoff, welches in eine Aufnahmeöffnung des Trägerteils eingeschraubt ist.

Vorliegende Erfindung umfasst außerdem ein Verfahren zum Herstellen der Verbindungsanordnung aus mindestens einem Trägerteil aus Kunststoff und einem Gewindeelement aus Kunststoff, vorzugsweise ein Gewindeelement gemäß den oben beschriebenen Ausgestaltungen, wobei das Gewindeelement ein Außengewinde und deren Trägerteil eine Aufnahmeöffnung aufweist. Das Verfahren umfasst die folgenden Schritte: axiales Eindrehen des Gewindeelements in die Aufnahmeöffnung, dabei Formen eines Gegengewindes in einer Innenwand der Aufnahmeöffnung mithilfe einer Mehrzahl von Schneidstegen im Außengewinde und Erzeugen eines Presssitzes im geformten Gegengewinde durch Eingriff einer Mehrzahl von Hemmstegen, die eine geringere radiale Ausdehnung als die Schneidstege aufweisen und die über eine Mehrzahl von Spannuten getrennt zu den Schneidstegen angeordnet sind. Dieses Verfahren wird vorzugsweise durch das Abführen von Materialabrieb über die Spannuten ergänzt, wobei der Materialabrieb während des Formens des Gegengewindes auftritt.

Vorliegende Erfindung umfasst des Weiteren ein Herstellungsverfahren für das Gewindeelement aus Kunststoff, das die folgenden Schritte aufweist: Bereitstellen einer komplementär zum Gewindeelement ausgebildeten Spritzgussform, wobei das Gewindeelement ein Axialstück mit einer Mittelachse und einem um die Mittelachse in mehreren Windungen umlaufenden Gewindegang eines Außengewindes umfasst und eine Mehrzahl benachbarter Windungen zumindest über einen Teilbereichs des Axialstücks durch mindestens zwei parallel zur Mittelachse verlaufende Spannuten durchbrochen sind, so dass jede durchbrochene Windung zumindest einen Schneidsteg und einen Hemmsteg aufweist, in der eine radiale Ausdehnung des Schneidstegs größer ist als eine radiale Ausdehnung des Hemmstegs, wobei eine Kerndicke des Axialstücks senkrecht zur Mittelachse des Außengewindes zumindest in dem Teilbereich des Axialstücks außerhalb der Längsnuten konstant ist, Spritzgießen des Gewindeelements und entfernen des Gewindeelements aus der Spritzgussform. Für eine detailliertere geometrische Ausgestaltung der Spritzgussform wird auf die obige Erläuterung des Gewindeelements verwiesen, da die Spritzgussform vorzugsweise komplementär zu den dort beschriebenen geometrischen Merkmalen des Gewindeelements ausgestaltet ist.

### 4. Kurze Beschreibung der begleitenden Zeichnungen

Die vorliegende Erfindung wird unter Bezugnahme auf die detaillierten Figuren näher erläutert. Es zeigen:
- Fig. 1 A, B: eine bevorzugte Ausführungsform (A) einer erfindungsgemäßen Kunststoff-Schraube und (B) einer Gewindebuchse oder Hohlschraube mit Durchgangsbohrung,
- Fig. 2: eine Seitenansicht der Schraube aus Fig. 1 A,
- Fig. 3: eine Schnittansicht entlang der Linie 3-3 aus Fig. 2,
- Fig. 4: eine axiale Schnittansicht der bevorzugten Ausführungsform der erfindungsgemäßen Schraube gemäß Fig. 2 entlang der Linie 4-4,
- Fig. 5: eine Ansicht der bevorzugten Kunststoff-Schraube gemäß Fig. 2 von unten,
- Fig. 6: eine axiale Schnittansicht entlang der Linie 6-6 aus Fig. 5,
- Fig. 7: ein Drehmomentdiagramm mit bevorzugten Drehmomentverläufen zum Eindrehen der gewindeformenden Kunststoff-Schraube bzw. des gewindeformenden Gewindeelements,

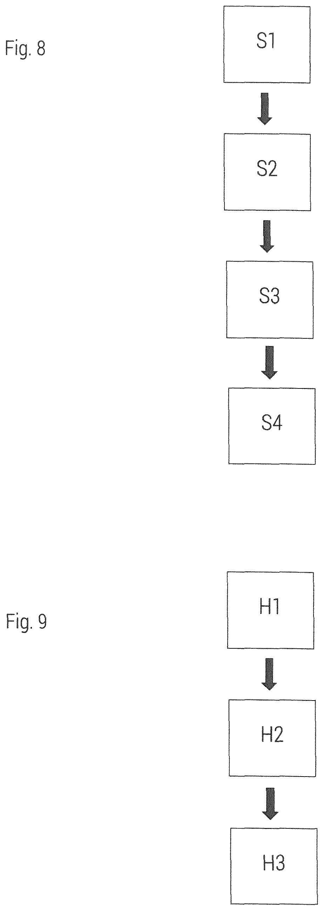

- Fig. 8: ein Flussdiagramm einer bevorzugten Ausführungsform des erfindungsgemäßen Verbindungsverfahrens und
- Fig. 9: ein Flussdiagramm einer bevorzugten Ausführungsform des erfindungsgemäßen Herstellungsverfahrens des Gewindeelements.

### 5. Detaillierte Beschreibung der bevorzugten Ausführungsformen

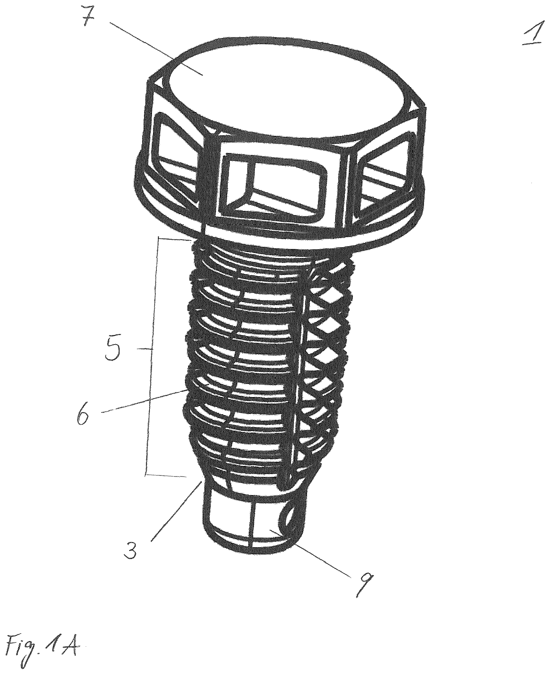

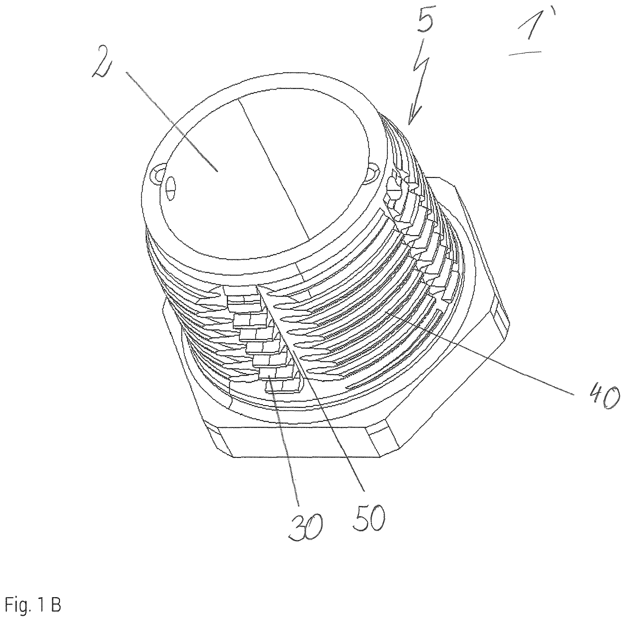

Eine bevorzugte Ausführungsform des erfindungsgemäßen Gewindeelements in Form einer Schraube 1 aus Kunststoff zeigt Fig. 1 A. Das Gewindeelement lässt sich bevorzugt auch als Gewindebuchse oder Gewindeeinsatz 2 aus Kunststoff realisieren, wie in Fig. 1 B dargestellt ist.

Ein Außengewinde 5 der Kunststoffschraube 1 bzw. der Kunststoffgewindebuchse 2 ist erfindungsgemäß bevorzugt so ausgelegt, dass es beim Eindringen in eine Aufnahmeöffnung eines Trägerteils in optimaler Weise ein Gegengewinde in dessen Innenwand formt. Die Formung des Gegengewindes kann durch einen Schneidvorgang oder durch eine Materialverformung oder durch eine Kombination beider Vorgänge erfolgen.

Die erfindungsgemäß bevorzugte Schraube 1, die beispielgebend in Fig. 1 gezeigt ist, besteht aus einem Schraubenschaft 3 mit einem massiven Kern und dem Außengewinde 5 mit einem einzelnen Gewindegang 6, einem Schraubenkopf 7, einem Übergangsbereich 8 zwischen dem Schraubenschaft 3 und dem Schraubenkopf 7, einem Antriebsmittel am Schraubenkopf 7 und aus einer Spitze 9 an dem vom Schraubenkopf 7 abgewandten Ende des Kerns bzw. Schraubenschafts 3 der Schraube 1. Im Folgenden wird das Außengewinde 5 des Gewindeelements, bspw. die Schraube 1 aus Kunststoff oder die Gewindebuchse 2 aus Kunststoff, anhand der Schraube 1 beschrieben. Diese Beschreibung gilt in gleicher Weise für das Außengewinde des Gewindeeinsatzes 2.

Das Außengewinde 5 ist auf einem Axialstück 10 des massiven Schraubenschafts 3 oder an der radialen Außenseite eines hohlzylindrischen Gewindeeinsatzes 2 und somit eines dort angeordneten Axialstücks 10 ausgebildet. Es erstreckt sich parallel zur Mittelachse M des Gewindeelements. Der Gewindegang 6 verläuft in einer Mehrzahl von Windungen 20 um die Mittelachse M. Eine Windung 20 bezeichnet einen Umlauf mit einem Winkel von 360° um die Mittelachse M. Parallel zur Mittelachse M verlaufen entlang des Axialstücks 10 mindestens zwei Spannuten 50, wobei gemäß einer ersten bevorzugten Ausführungsform vorliegender Erfindung das Axialstück 10 einen runden Querschnitt aufweist. Gemäß unterschiedlicher bevorzugter Ausführungsformen vorliegender Erfindung ist eine Mehrzahl von Spannuten 50 vorgesehen, insbesondere zwei oder vier oder sechs oder acht Spannuten.

Die Spannuten 50 durchlaufen die einzelnen Windungen 20 des Gewindegangs 6. Vorzugsweise haben die Spannuten 50 eine radiale Tiefe bis zu einer Kerndicke D_{K} des Axialstücks 10 oder tiefer. Entsprechend fehlen im Bereich der Spannuten 50 die Windungen 20 vollständig. Weiterhin bevorzugt weisen die Spannuten 50 eine Breite b_{SN} in Umfangsrichtung des Gewindeelements im Bereich von 0,5 *mm* ≤ *b_{SN}* ≤ 5 *mm*, vorzugsweise b_{SN}=1,3 mm bei einem bevorzugten zweischneidigen Gewinde und vorzugsweise b_{SN}≤3 mm bei einem vierschneidigen Gewinde, auf. Dies gewährleistet einen ausreichend großen Raum zur Aufnahme von durch die Schneidstege 30 und/oder die Hemmstege 40 abgetragenes Material (siehe unten).

Die Kerndicke D_{K} bezeichnet die Dicke am Gewindegrund des Schraubenschafts oder des Gewindeeinsatzes 2. Üblicherweise spricht man an dieser Stelle von einem Kerndurchmesser des Außengewindes 5, sofern es auf einem Schaft 3 oder einem Gewindeeinsatz 2 mit rundem Querschnitt gemäß der oben beschriebenen ersten bevorzugten Ausführungsform angeordnet ist. Bei vorliegender Erfindung ist es ebenfalls bevorzugt, den Schaft der Schraube 1 oder die Außenseite des Gewindeeinsatzes 2 als Gleichdick auszubilden, das im Querschnitt konvexe Seitenflächen aufweist und als Reuleaux-Polygon definiert wird. Die unten näher erläuterte Konfiguration von Schneid- 30 und Hemmstegen 40 ist auf dieser Grundstruktur mit gleichdickem Querschnitt in gleicher Weise realisierbar wie auf einem im Querschnitt rundem Axialstück 10.

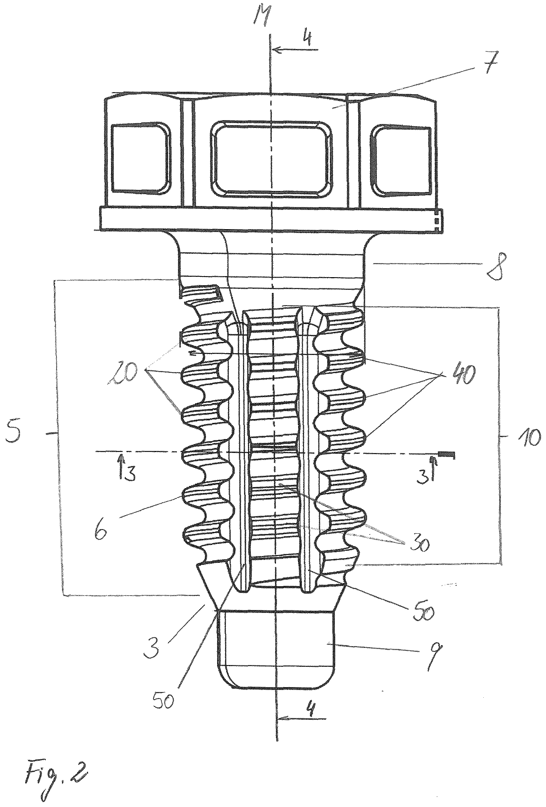

Die Spannuten 50 unterteilen die Mehrzahl von Windungen 20 im Axialstück 10 in eine Mehrzahl axial zueinander beabstandeter, abschnittsweise umfänglich angeordneter und in axialer Richtung aufeinander folgender Schneidstege 30 und in eine Mehrzahl axial zueinander beabstandeter und in axialer Richtung aufeinander folgender Hemmstege 40 (siehe Fig. 2). Da in der bevorzugten Ausführungsform der Figuren 2 bis 4 vier Spannuten 50 vorgesehen sind, weist das Außengewinde 5 bevorzugt zweimal eine Mehrzahl von sich paarweise gegenüber liegenden Schneidstegen 30 und Hemmstegen 40 auf. Es ist ebenfalls bevorzugt, die Spannuten 50 beliebig umfänglich zu verteilen, so dass die Anordnung der Schneid- 30 und Hemmstege 40 nicht symmetrisch ist.

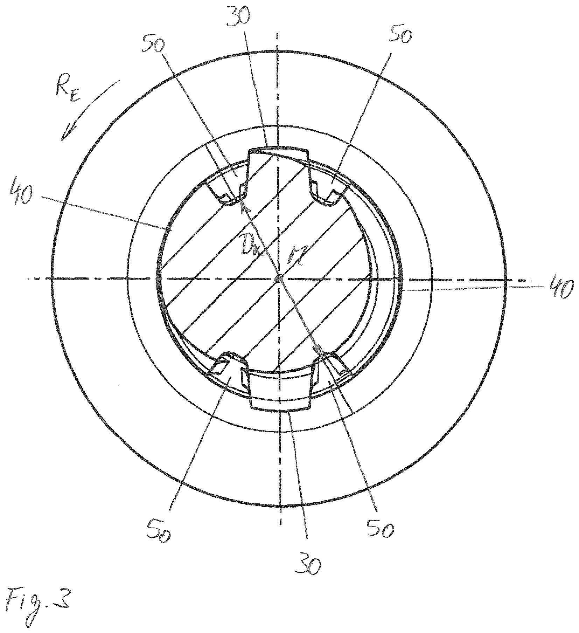

Wie man anhand des radialen Schnittbilds in Fig. 3 erkennen kann, ist eine radiale Ausdehnung des Schneidstegs 30 größer als eine radiale Ausdehnung des Hemmstegs 40 in derselben Windung 20. Vorzugsweise erstreckt sich der Schneidsteg 30 in radialer Richtung um eine Länge aus dem Bereich von 0,1 bis 1,0 mm über die radiale Ausdehnung des Hemmstegs 40 hinaus. Gemäß einer bevorzugten Ausführungsform vorliegender Erfindung ragt der Schneidsteg in radialer Richtung 0,35 mm pro Seite über den Hemmsteg hinaus. Vorzugsweise nimmt die Überstandslänge des Schneidstegs mit zunehmendem Durchmesser des Gewindeelements ebenfalls zu.

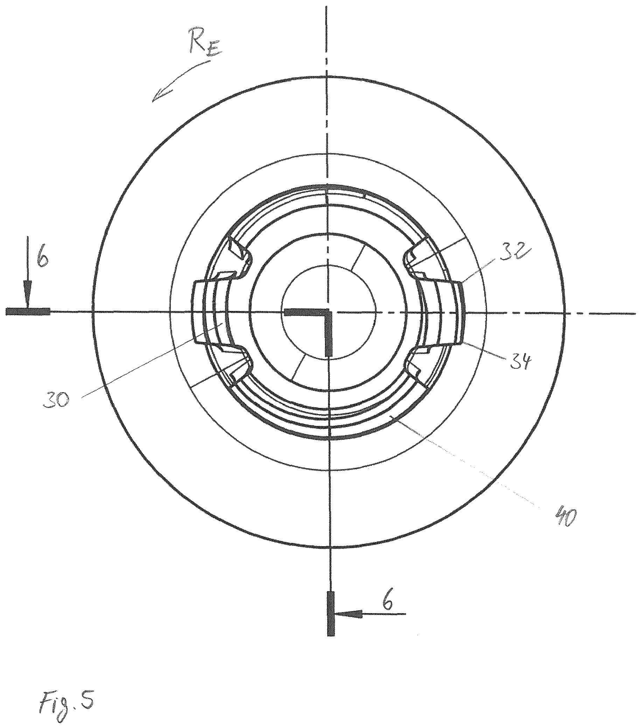

Gemäß einer weiteren bevorzugten Ausführungsform vorliegender Erfindung weist der Schneidsteg 30 betrachtet in Eindrehrichtung R_{E} einen Anfangspunkt 32 und einen Endpunkt 34 auf (siehe Fig. 5). Um die Schneidwirkung beim Eindrehen und die Hemmung beim Ausdrehen des Gewindeelements durch den Schneidsteg 30 zu steigern, ist die radiale Ausdehnung des Schneidstegs 30 am Anfangspunkt 32 größer als am Endpunkt 34. Eine derartige Konfiguration ist ebenfalls bei den Hemmstegen 40 bevorzugt einsetzbar.

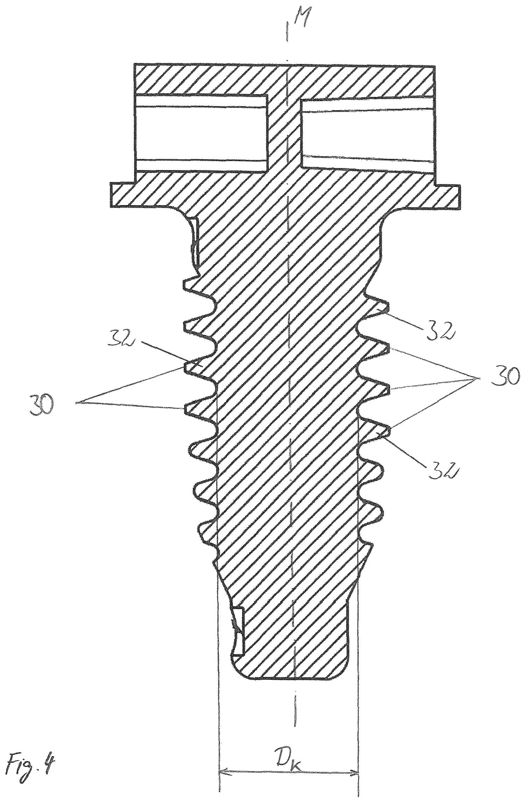

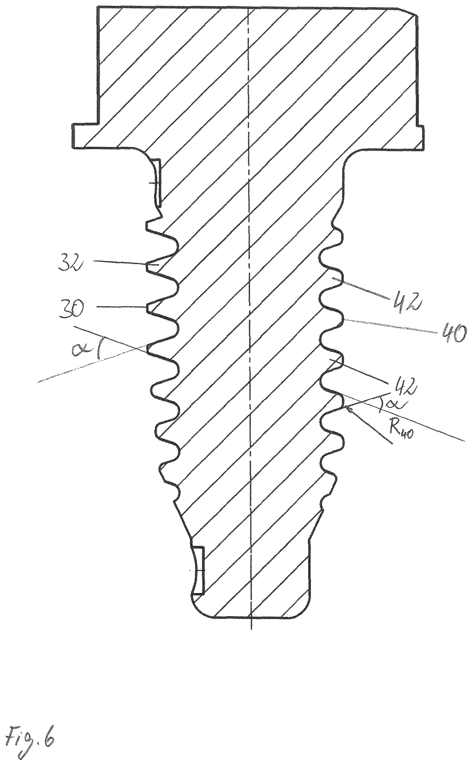

Betrachtet man die Stirnseiten 32 der Schneidstege 30 in den axialen Schnittbildern der Figuren 4 und 6 sowie die Stirnseiten 42 der Hemmstege 40 in dem Axialschnitt der Figur 6 ist als bevorzugte Ausführungsform vorliegender Erfindung erkennbar, dass die radiale Außenseite der Schneidstege 30 scharfkantig ausgebildet ist. Zu diesem Zweck ist der Schneidsteg 30 radial außen spitz zulaufend geformt (nicht gezeigt). Gemäß einer weiteren Ausführungsform ist der Schneidsteg 30 radial außen abgeflacht, wie es die Figuren 4 und 6 zeigen. Diese scharfkantige Form der radialen Außenseite der Schneidstege 30 unterstützt die Schneidwirkung der Schneidstege 30 im Kunststoff des Trägerteils, wenn das Gegengewinde erzeugt wird. Es ist ebenfalls bevorzugt, die Schneidstege 30 genauso wie die Hemmstege 40 an der radialen Außenseite betrachtet im Axialschnittbild verrundet auszugestalten. Vorzugsweise sind die Hemmstege 40 mit einem Radius R₄₀ = 0,25 mm verrundet. Vorzugsweise liegt der Radius in einem Bereich von 0,05 mm ≤ R₄₀ ≤ 0,4 mm. Die Schneidstege 30 nutzen bevorzugt den gleichen Radius oder eine parallel zur Mittelachse M verlaufende Abflachung oder einen Radius von unendlich.

Die Flanken der Schneidstege 30 und der Hemmstege 40 schließen im Axialschnitt vorzugsweise einen Winkel im Bereich von 30° ≤ α ≤ 40°, bevorzugt α = 35°, ein (siehe Fig. 6). Es ist ebenfalls bevorzugt, die Schneidstege 30 mit einem größeren Flankenwinkel α als die Hemmstege 40 auszugestalten. Dies unterstützt und fördert die mechanischen Spannungen zwischen dem geformten Gegengewinde und den Flanken der Hemmstege 40, so dass die Hemmwirkung auf die Drehung des Gewindeelements verstärkt wird.

Ausgehend von der oben beschriebenen Geometrie der Schneidstege 30 und der Hemmstege 40 ist erkennbar, dass die Schneidstege 30 in Eindrehrichtung R_{E} als Schneiden im Kunststoff des Trägerteils fungieren. Dreht man das Gewindeelement in Ausdrehrichtung R_{A}, wirken die Schneidstege 30 aufgrund ihrer radialen Ausdehnung und wegen der bevorzugten scharfkantigen Geometrie hemmend auf die Drehbewegung. Die Druckstege 40 wirken bevorzugt elastisch drückend in den vorgefurchten Wendeln des Gegengewindes des Trägerteils. Dadurch erzeugen sie eine hemmende Wirkung bezogen auf die Drehung des Gewindeelements sowohl in Eindreh- R_{E} wie in Ausdrehrichtung R_{A}.

Die Aufteilung des Axialstücks 10 in solche Stege 30, 40 über die gesamte Länge oder einen Teil der Länge des Außengewindes 5 hat mehrere Gründe. Aufgrund der erfindungsgemäß bevorzugten Konstruktion des Außengewindes 5 folgt auf einen schneidenden Schneidsteg 30 immer ein hemmender Hemmsteg 40 und danach ein Schneidsteg 30 usw. Durch diesen Wechsel wird bevorzugt das Erzeugen des Gegengewindes in gleicher Weise wie ein verlässlicher Halt des Außengewindes 5 durch Presssitz im Trägerteil unterstützt. Durch die gezielt anordenbare Anzahl und die Position der Schneidstege 30 und der Hemmstege 40 werden Kraftangriffspunkte am Außengewinde 5 während des Ein- und Ausdrehens des Gewindeelements in das Trägerteil gezielt verteilt. Da diese Kraftangriffspunkte das auf das Gewindeelement wirkende Torsionsmoment in Größe und axialer Verteilung bestimmen, kann über die Anordnung der Schneidstege 30 und der Hemmstege 40 die mechanische Belastung des Gewindeelements gezielt eingestellt werden. Ergänzend dazu ist es bevorzugt, das Axialstück 10 mit Schneidstegen 30 und Hemmstegen 40 in seiner Länge zu variieren, in unterschiedliche Längenabschnitte aufzuteilen und/oder nur einen oder mehrere Axialstücke 10 gezielt bezogen auf die Länge des Außengewindes 5 an unterschiedlichen Axialpositionen anzuordnen. Auf diese Weise erfolgt eine Anpassung des Gewindeelements an einen Kunststoff des Trägerteils und seine Materialeigenschaften und/oder an eine Geometrie der Aufnahmeöffnung für das Gewindeelement im Trägerteil und/oder an eine Mehrzahl von Trägerteilen, die mit nur einem Gewindeelement zu verbinden sind.

Das Gewindeelement besteht aus einem Hochleistungskunststoff mit bevorzugt hoher Temperaturbeständigkeit, hoher Steifigkeit sowie hoher Festigkeit bei geringer Wasseraufnahme. Hinsichtlich der Größe dieser Eigenschaften muss ein möglichst großes Gefälle zu derjenigen des Kunststoffs des Trägerteils bestehen, um die gewünschte Formstabilität in dem Gewindeprofil und in der Schnittgeometrie bei der Schneid- bzw. Umformbarkeit zum Formen des Gegengewindes im Trägerteil zu erhalten. Bevorzugte Hochleistungskunststoffe für das Gewindeelement sind Polyphthalamid-GF (PPA-GF); Copolyamid auf der Basis von Polyphthalamid-GF; Polyetherimid-GF (PEI-GF; Polyetheretherketon-GF (PEEK-GF) und Polyphenylensulfid (PPS). In Frage kommen auch die folgenden Werkstoffe: Polyamid - Hochglasgefüllt; Polyphthalamid - Carbonfaserverstärkt; Polyphthalamid - Carbonfaserverstärkt und Glasfaserverstärkt; Copolyamid auf der Basis von Polyphthalamid - Carbonfaserverstärkt; Copolyamid auf der Basis von Polyphthalamid - Carbonfaserverstärkt und glasfaserverstärkt; duromere Kunststoffe. Es versteht sich, dass dies nur bevorzugte Beispiele für den Werkstoff des Gewindeelementes sind; so können auch andere thermische Hochleistungskunststoffe verwendet werden.

Um eine Verbindungsanordnung mit mindestens einem Trägerteil aus Kunststoff und einem oben beschriebenen Gewindeelement aus Kunststoff herzustellen, sind die folgenden Schritte erforderlich: axiales Eindrehen des Gewindeelements in die Aufnahmeöffnung im Schritt S1, dabei Formen eines Gegengewindes in einer Innenwand der Aufnahmeöffnung mithilfe einer Mehrzahl von Schneidstegen 30 im Außengewinde im Schritt S2, Abführen von Materialabrieb über die Spannuten, der während des Gewindeformens auftritt, im Schritt S3 und Erzeugen eines Presssitzes im geformten Gegengewinde durch Eingriff einer Mehrzahl von Hemmstegen, die eine geringere radiale Ausdehnung als die Schneidstege aufweisen und die über eine Mehrzahl von Spannuten getrennt zu den Schneidstegen angeordnet sind im Schritt S4.

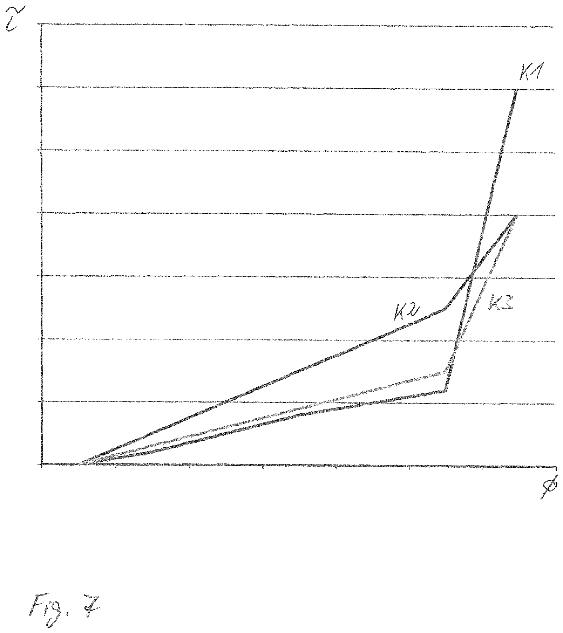

Bezug nehmend auf Fig. 7 sind Drehmomentkurven K₁ bis K₃ dargestellt, die das Einschrauben eines Gewindeelements, hier eine Schraube, in ein Trägerteil charakterisieren. Die Kurve K₁ beschreibt das Drehmoment in Abhängigkeit vom Drehwinkel des Gewindeelements mit metrischem Gewinde in einer Metall-Metall-Verbindung. Aufgrund der geringen Reibung beim Eindrehen verläuft die Kurve relativ flach. Im Bereich des Anstiegssprungs der Kurve K₁ setzt der Kopf des Gewindeelements auf dem Trägerteil auf (Kopfanlage). Durch die Stabilität des Metalls ist der Bereich zwischen Kopfanlage und Bruchmoment des Gewindeelements im Maximum der Kurve K₁ relativ groß. Die Kurve K₂ beschreibt das Eindrehen eines Gewindeelements aus Kunststoffmit dem selbstformenden Gewinde gemäß DE 10 2004 021 484 A1. Durch ein erhöhtes Drehmoment im Bereich der Kopfanlage und ein geringeres Bruchmoment jeweils verglichen mit dem metrischen Gewinde der Metall-Metall-Verbindung der Kurve K₁ zeigt das selbstformende Gewinde des Standes der Technik eine eingeschränkte praktische Anwendbarkeit. Die Kurve K3 charakterisiert eine bevorzugte Ausführungsform vorliegender Erfindung Durch die Form des selbstformenden Gewindes wurde das Drehmoment bis zur Kopfanlage gesenkt. Gleichzeitig konnte damit der Bereich des Anzugsmoments der Schraube, also der Bereich zwischen Kopfanlage und Bruchmoment, vergrößert werden. Dies hat zur Folge, dass das Gewindeelement mit einer geringeren Versagenswahrscheinlichkeit im Vergleich zum Stand der Technik festgezogen werden kann.

Erfindungsgemäß bevorzugt wird das Gewindeelement mittels Spritzguss hergestellt. Dazu sind folgende Schritte vorgesehen: In einem ersten Schritt (H1) wird eine komplementär zum Gewindeelement ausgebildete Spritzgussform bereitgestellt. Das Gewindeelement weist die Form einer der oben beschriebenen bevorzugten Ausführungsformen auf, die die entsprechende Gestaltung der Spritzgussform bestimmt. In einem nachfolgenden Schritt wird das Gewindeelement spritzgegossen (Schritt H2) und danach aus der Spritzgussform entformt (Schritt H3).

### Bezugszeichenliste

- 1: Schraube
- 1': Gewindebuchse oder Hohlschraube
- 2: Duchgangsbohrung
- 5: Außengewinde
- 6: Gewindegang
- 7: Kopf
- 8: Übergangsbereich
- 9: Spitze
- 10: Axialstück
- 20: Windung
- 30: Schneidsteg
- 40: Hemmsteg
- 50: Spannut
- D_{K}: Kerndicke
- R_{E}: Eindrehrichtung
- R_{A}: Ausdrehrichtung
- M: Mittelachse
- α: Flankenwinkel

## Patentansprüche

1. Ein Gewindeelement aus Kunststoff, das ein Axialstück (10) mit einer Mittelachse (M) und einem um die Mittelachse (M) in mehreren Windungen umlaufenden Gewindegang (6) eines Außengewindes (5) umfasst, welches angepasst ist, um bei einem Einschrauben in eine Aufnahmeöffnung eines Trägerteils aus Kunststoff ein Gegengewinde zu formen, **dadurch gekennzeichnet, dass**
eine Mehrzahl benachbarter Windungen zumindest über einen Teilbereich des Axialstücks (10) durch mindestens zwei parallel zur Mittelachse (M) verlaufende Spannuten (50) durchbrochen sind, so dass jede durchbrochene Windung zumindest einen Schneidsteg (30) und einen Hemmsteg (40) aufweist, in der eine radiale Ausdehnung des Schneidstegs (30) größer ist als eine radiale Ausdehnung des Hemmstegs (40), wobei eine Kerndicke (D_{K}) des Axialstücks (10) senkrecht zur Mittelachse (M) des Außengewindes (5) zumindest in dem Teilbereich des Axialstücks (10) außerhalb der Längsnuten konstant ist.

2. Gewindeelement gemäß Anspruch 1, das eine geradzahlige Anzahl von Spannuten (50) aufweist, vorzugsweise zwei oder vier oder sechs oder acht.

3. Gewindeelement gemäß Anspruch 1 oder 2, das einen, zwei oder vier Schneidstege (30) pro Windung umfasst, wobei bei mehr als einem Schneidsteg (30) diese paarweise einander gegenüberliegend angeordnet sind.

4. Gewindeelement gemäß einem der vorhergehenden Ansprüche, in dem die radiale Ausdehnung des Schneidstegs (30) 0,1 bis 0,5 mm größer ist als die radiale Ausdehnung des Hemmstegs (40) der Windung.

5. Gewindeelement gemäß einem der vorhergehenden Ansprüche, in dem der Schneidsteg (30) an seiner radialen Außenseite scharfkantig ist, vorzugsweise abgeflacht oder einen Krümmungsradius von unendlich aufweist.

6. Gewindeelement gemäß einem der vorhergehenden Ansprüche, in dem der Hemmsteg (40) an seiner radialen Außenseite verrundet ist.

7. Gewindeelement gemäß einem der vorhergehenden Ansprüche, dessen Spannuten (50) die Windungen des Außengewindes (5) bis zur Kerndicke (D_{K}) oder darüber hinaus durchbrechen.

8. Gewindeelement gemäß einem der vorhergehenden Ansprüche, dessen Schneidsteg (30) eine umfängliche Erstreckung mit einem Anfangs- und einem Endpunkt betrachtet in Eindrehrichtung (R_{E}) aufweist, wobei die radiale Ausdehnung am Anfangspunkt und am Endpunkt gleich groß ist oder wobei die radiale Ausdehnung am Anfangspunkt größer ist als am Endpunkt.

9. Gewindeelement gemäß einem der vorhergehenden Ansprüche, das als Kunststoffschraube (1) mit einem Schraubenkopf und einer Schraubenspitze ausgebildet ist.

10. Gewindeelement gemäß einem der Ansprüche 1 bis 8, das als Gewindebuchse (1') mit einem Innengewinde oder einer Durchgangsöffnung ausgebildet ist.

11. Verbindungsanordnung mit mindestens einem Trägerteil aus Kunststoff und einem Gewindeelement gemäß einem der vorhergehenden Ansprüche, welches in eine Aufnahmeöffnung des Trägerteils eingeschraubt ist.

12. Verfahren zum Herstellen einer Verbindungsanordnung aus mindestens einem Trägerteil aus Kunststoff und einem Gewindeelement aus Kunststoff, vorzugsweise ein Gewindeelement gemäß einem der Ansprüche 1 bis 10, deren Gewindeelement ein Außengewinde (5) und deren Trägerteil eine Aufnahmeöffnung aufweist, und das Verfahren ist **gekennzeichnet durch** die folgenden Schritte:
a. axiales Eindrehen des Gewindeelements in die Aufnahmeöffnung,
b. dabei Formen eines Gegengewindes in einer Innenwand der Aufnahmeöffnung mithilfe einer Mehrzahl von Schneidstegen (30) im Außengewinde und
c. Erzeugen eines Presssitzes im geformten Gegengewinde durch Eingriff einer Mehrzahl von Hemmstegen (40), die eine geringere radiale Ausdehnung als die Schneidstege (30) aufweisen und die über eine Mehrzahl von Spannuten (50) getrennt zu den Schneidstegen (30) angeordnet sind.

13. Verfahren gemäß Anspruch 12 mit dem weiteren Schritt:
Abführen von Materialabrieb über die Spannuten (50), der während des Gewindeformens auftritt.

14. Herstellungsverfahren für ein Gewindeelement aus Kunststoff, **gekennzeichnet durch** die folgenden Schritte:
a. Bereitstellen einer komplementär zum Gewindeelement ausgebildeten Spritzgussform, wobei das Gewindeelement ein Axialstück (10) mit einer Mittelachse (M) und einem um die Mittelachse (M) in mehreren Windungen umlaufenden Gewindegang (6) eines Außengewindes (5) umfasst und eine Mehrzahl benachbarter Windungen zumindest über einen Teilbereich des Axialstücks (10) durch mindestens zwei parallel zur Mittelachse (M) verlaufende Spannuten (50) durchbrochen sind, so dass jede durchbrochene Windung zumindest einen Schneidsteg (30) und einen Hemmsteg (40) aufweist, in der eine radiale Ausdehnung des Schneidstegs (30) größer ist als eine radiale Ausdehnung des Hemmstegs (40), wobei eine Kerndicke (D_{K}) des Axialstücks (10) senkrecht zur Mittelachse (M) des Außengewindes (5) zumindest in dem Teilbereich des Axialstücks (10) außerhalb der Längsnuten konstant ist.
b. Spritzgießen des Gewindeelements und
c. Entformen des Gewindeelements aus der Spritzgussform.

## Claims

1. A thread element made of plastic comprising an axial piece (10) having a central axis (M) and a thread turn (6) of an outer thread (5) circulating around the central axis (M) in several windings, wherein the outer thread (5) is adapted to form a counter-thread when being screwed into a receiving opening of a support part made of plastic, **characterized in that**
a plurality of adjacent windings are interrupted at least over a part region of the axial piece (10) by at least two chip flutes (50) extending parallel to the central axis (M), so that each interrupted winding comprises at least one cutting web (30) and one inhibition web (40) in which a radial extension of the cutting web (30) is larger than a radial extension of the inhibition web (40), wherein a core thickness (D_{K}) of the axial piece (10) perpendicular to the central axis (M) of the outer thread (5) is constant at least in the part region of the axial piece (10) outside the longitudinal flutes.

2. The thread element according to claim 1, comprising an even number of chip flutes (50), preferably two or four or six or eight.

3. The thread element according to claim 1 or 2 comprising one, two or four cutting webs (30) per winding, wherein in the case of more than one cutting web (30), these are arranged in pairs opposite one another.

4. The thread element according to one of the preceding claims, in which the radial extension of the cutting web (30) is 0.1 to 0.5 mm larger than the radial extension of the inhibition web (40) of the winding.

5. The thread element according to one of the preceding claims, in which the cutting web (30) is sharp-edged on its radial outer side, preferably flattened or with an infinite radius of curvature.

6. The thread element according to one of the preceding claims, in which the inhibition web (40) is rounded on its radial outer side.

7. The thread element according to one of the preceding claims, the chip flutes (50) of which interrupt the windings of the outer thread (5) up to or beyond the core thickness (D_{K}).

8. The thread element according to one of the preceding claims, the cutting web (30) of which has a circumferential extension with a starting point and an end point viewed in the screw-in direction (R_{E}), wherein the radial extension is equal at the starting point and the end point or wherein the radial extension at the starting point is larger than at the end point.

9. The thread element according to one of the preceding claims, which is formed as a plastic screw (1) with a screw head and a screw tip.

10. The thread element according to one of the claims 1 to 8, which is formed as a thread bushing (1') having an inner thread or a through-opening.

11. A connection assembly comprising at least one support part made of plastic and a thread element according to one of the preceding claims, which is screwed into a receiving opening of the support part.

12. Method for manufacturing a connection assembly from at least one support part made of plastic and a thread element made of plastic, preferably a thread element according to one of the claims 1 to 10, the thread element of which has an outer thread (5) and the support part of which has a receiving opening, and the method is **characterized by** the following steps:
a. axial screwing-in of the thread element into the receiving opening,
b. thereby forming a counter-thread in an inner wall of the receiving opening by means of a plurality of cutting webs (30) in the outer thread, and
c. creating a press fit in the formed counter-thread by engagement of a plurality of inhibition webs (40) which comprise a smaller radial extension than the cutting webs (30) and which are arranged separately from the cutting webs (30) by a plurality of chip flutes (50).

13. The method according to claim 12 with the further step:
removing material abrasion which occurs during the thread forming by the chip flutes (50).

14. Method for manufacturing a thread element made of plastic **characterized by** the following steps:
a. providing an injection mold formed complementary to the thread element, wherein the thread element comprises an axial piece (10) having a central axis (M) and a thread turn (6) of an outer thread (5) circulating around the central axis (M) in several windings, and a plurality of adjacent windings are interrupted at least over a part region of the axial piece (10) by at least two chip flutes (50) extending parallel to the central axis (M), so that each interrupted winding comprises at least one cutting web (30) and one inhibition web (40) in which a radial extension of the cutting web (30) is larger than a radial extension of the inhibition web (40), wherein a core thickness (D_{K}) of the axial piece (10) perpendicular to the central axis (M) of the outer thread (5) is constant at least in the part region of the axial piece (10) outside the longitudinal flutes,
b. injection molding the thread element and
c. demolding the thread element from the injection mold.

## Revendications

1. Élément fileté en plastique, comportant une pièce axiale (10) avec un axe central (M) et un pas de filetage (6) d'un filetage externe (5) s'étendant en plusieurs spires autour de l'axe central (M), lequel est adapté pourformer un contre-filetage lors du vissage dans une ouverture de réception d'une pièce de support en plastique, **caractérisé en ce que**
une pluralité de spires voisines sont interrompues par au moins deux rainures de serrage (50) parallèles à l'axe central (M) au moins sur une partie de la pièce axiale (10), si bien que chaque spire présente au moins une âme de coupe (30) et une âme de blocage (40), une extension radiale de l'âme de coupe (30) étant plus grande qu'une extension radiale de l'âme de blocage (40), dans lequel une épaisseur de noyau (D_{K}) de la pièce axiale (10) perpendiculaire à l'axe central (M) du filetage externe (5) est constante au moins dans la partie de la pièce axiale (10) à l'extérieur des rainures longitudinales.

2. Élément fileté selon la revendication 1, lequel présente un nombre pair de rainures (50), de préférence deux ou quatre ou six ou huit.

3. Élément fileté selon la revendication 1 ou 2, lequel comporte une, deux ou quatre âmes de coupe (30) par spire, celles-ci étant disposées par paires les unes en face des autres, en présence de plus d'une âme de coupe (30).

4. Élément fileté selon l'une des revendications précédentes, dans lequel l'extension radiale de l'âme de coupe (30) est supérieure de 0,1 à 0,5 mm à l'extension radiale de l'âme de blocage (40) de la spire.

5. Élément fileté selon l'une des revendications précédentes, dans lequel l'âme de coupe (30) est tranchante sur son côté extérieur radial, de préférence aplatie ou présente un rayon infini de courbure.

6. Élément fileté selon l'une des revendications précédentes, dans lequel l'âme de blocage (40) est arrondie sur son côté extérieur radial.

7. Élément fileté selon l'une des revendications précédentes, dont les rainures de serrage (50) traversent les spires du filetage externe (5) jusqu'à l'épaisseur de noyau (D_{K}) ou au-delà.

8. Élément fileté selon l'une des revendications précédentes, dont l'âme de coupe (30) présente une étendue périphérique avec un point de départ et un point final dans le sens de vissage (R_{E}), dans lequel l'extension radiale est égale au point de départ et au point final ou dans lequel l'extension radiale est plus grande au point de départ qu'au point final.

9. Élément fileté selon l'une des revendications précédentes, lequel est formé comme une vis en plastique (1) dotée d'une tête de vis et d'une pointe de vis.

10. Élément fileté selon l'une des revendications 1 à 8, lequel est formé comme une douille filetée (1') dotée d'un filetage interne ou d'une ouverture de passage.

11. Dispositif de raccordement constitué au moins d'une pièce de support en plastique et d'un élément fileté selon l'une des revendications précédentes, lequel est vissé dans une ouverture de réception de la pièce de support.

12. Procédé de fabrication d'un dispositif de raccordement constitué d'au moins une pièce de support en plastique et d'un élément fileté en plastique, de préférence un élément fileté selon l'une des revendications 1 à 10, dont l'élément fileté présente un filetage externe (5) et sa pièce de support présente une ouverture de réception, et le procédé étant **caractérisé par** les étapes suivantes :
a. vissage axial de l'élément fileté dans l'ouverture de réception
b. en même temps, formation d'un contre-filetage dans une paroi interne de l'ouverture de réception à l'aide d'une pluralité d'âmes de coupe (30) dans le filetage externe, et
c. réalisation d'un ajustement serré dans l'élément fileté formé par la prise d'une pluralité d'âmes de blocage (40) présentant une extension radiale plus petite que les âmes de coupe (30) et disposées sur une pluralité de rainures de serrage (50) à distance des ponts de coupe (30).

13. Procédé selon la revendication 12, incluant l'étape supplémentaire suivante :
- évacuation des produits d'abrasion matérielle sur les rainures (50), générés lors de la formation du filetage.

14. Procédé de fabrication d'un élément fileté en plastique, **caractérisé par** les étapes suivantes :
a. mise à disposition d'un moule à injection formé de façon complémentaire à l'élément fileté, ledit élément fileté comportant une pièce axiale (10) avec un axe central (M) et un filetage (6) s'étendant en plusieurs spires autour de l'axe central (M) d'un filetage externe (5), et une pluralité de spires voisines étant interrompues par au moins deux rainures de serrage (50) parallèles à l'axe central (M) au moins sur une partie de la pièce axiale (10), si bien que chaque spire interrompue comporte au moins une âme de coupe (30) et une âme de blocage (40), une extension radiale de l'âme de coupe (30) étant plus grande qu'une extension radiale de l'âme de blocage (40), une épaisseur de noyau (D_{K}) de la pièce axiale (10) perpendiculaire à l'axe central (M) du filetage externe (5) étant constante au moins dans la partie de la pièce axiale (10) à l'extérieur des rainures longitudinales,
b. moulage par injection de l'élément fileté, et
c. démoulage de l'élément fileté du moule à injection.
